# EUROPÄISCHE PATENTSCHRIFT

(11) **EP 2 018 494 B1**
(45) Veröffentlichungstag und Bekanntmachung des Hinweises auf die Patenterteilung: **22.07.2009**
(21) Anmeldenummer: 07725237.7
(22) Anmeldetag: 15.05.2007
(51) Int. Cl.: F16H 49/00, H02K 41/06

(54) **GETRIEBE, INSBESONDERE SPANNUNGSWELLENGETRIEBE, UND VERFAHREN ZUM BETREIBEN EINES GETRIEBES**
GEAR SYSTEM, IN PARTICULAR A HARMONIC DRIVE GEAR SYSTEM AND METHOD FOR OPERATING A GEAR SYSTEM
RÉDUCTEUR, EN PARTICULIER RÉDUCTEUR HARMONIC DRIVE, ET PROCÉDÉ POUR FAIRE FONCTIONNER UN RÉDUCTEUR

(30) Priorität: 15.05.2006 DE 102006022543
(43) Veröffentlichungstag der Anmeldung: 28.01.2009
(73) Patentinhaber: Harmonic Drive AG, 65555 Limburg a.d. Lahn (DE)
(72) Erfinder: MENDEL, Matthias, 65558 Eppenrod (DE); SCHULZE, Carsten, 65549 Limburg a. d. Lahn (DE); ZENS, Frank, 65582 Diez (DE)
(74) Vertreter: Müller, Eckhard
(86) Internationale Anmeldenummer: PCT/EP2007/004320
(87) Internationale Veröffentlichungsnummer: WO 2007/131777

(56) Entgegenhaltungen:
- WO-A-20/04025815
- DE-B- 1 135 259
- DE-C1- 10 137 230
- DE-C1- 19 747 566
- JP-A- 2 275 146
- US-B2- 6 664 711

## Beschreibung

Die Erfindung betrifft ein Spannungswellengetriebe, gemäß dem Oberbegriff des Anspruches 1.

### Stand der Technik

Ein gattungsgemäßes Spannungswellengetriebes ist aus der WO 2004/025815 A1 bekannt. Das bekannte Spannungswellengetriebe weist eine Verformungseinrichtung auf, mittels welcher der Flexspline des Spannungswellengetriebes derart elastisch verformbar ist, dass der Flexspline lediglich in wenigstens zwei Bereichen mit dem Außenring des Spannungswellengetriebes kämmt, wodurch Außenring und Flexspline relativ zueinander bewegbar sind. Dazu weist die Verformungseinrichtung des bekannten Spannungswellengetriebes Aktuatoren auf, welche Zugkraft erzeugen und zwischen den Bereichen an dem Flexspline angreifen.

Ein ähnliches Spannungswellengetriebes ist aus der DE 101 37 230 C1 bekannt. Es wird dort die umlaufende elliptische Verformung des Flexsplines des Spannungswellengetriebes von magnetischen Kräften hervorgerufen. Dazu sind außerhalb des Flexsplines über seinen Umfang verteilt angeordnete Elektromagnete vorgesehen, welche mit einem an dem Flexspline angeordneten flussführenden Element zusammenwirken. Das flussführende Element ist dabei durch eine Vielzahl von Lamellen gebildet, welche über Rippen an dem Flexspline befestigt sind, sodass die elastische Verformbarkeit des Flexsplines nicht behindert ist. Bei dem bekannten Spannungswellengetriebe wird die umlaufende elliptische Verformung des Flexsplines erzeugt, indem die magnetischen Kräfte jeweils im Bereich der großen Ellipsenachse wirken und den Flexspline radial nach außen ziehen, in dem in diesem Bereich die Elektromagneten Anziehungskräfte auf das flussführende Element ausüben.

Bei dem bekannten Spannungswellengetriebe können zum Verformen des Flexsplines zusätzlich auch magnetische Kräfte auf den Bereich der kleinen Ellipsenachse wirken, sofern das flussführende Element bzw. die Lamellen als Dauermagnet ausgebildet sind. In diesem Fall werden die Elektromagnete in der Weise bestromt, dass gegenüber den im Bereich der kleinen Ellipsenachse angeordneten flussführenden Lamellen Abstoßungskräfte erzeugt werden, sodass der Flexspline im Bereich der kleinen Ellipsenachse radial nach innen gedrückt wird.

Die bei dem bekannten Spannungswellengetriebe vorgesehenen Maßnahmen zum Verformen des Flexsplines sind relativ aufwendig und teuer, da hierfür zusätzliche Bauteile, wie die flussführenden Lamellen, an dem Flexspline angebracht werden müssen, welche zugleich aber die Elastizität des Flexsplines nicht behindern dürfen.

Auch ist aufgrund der außerhalb des Flexsplines angeordneten Elektromagnete sowie der flussführenden Lamellen das Spannungswellengetriebe in radialer Richtung relativ aufbauend. Da die Elektromagneten und die Lamellen in axialer Richtung gesehen, hinter dem Eingriffsbereich der Verzahnungen des Flexsplines und des Hohlringes des Spannungswellengetriebes angeordnet ist, ist das Spannungswellengetriebe auch in axialer Richtung relativ aufbauend.

Ein weiteres Spannungswellengetriebe ist aus der JP 02275146 A bekannt. Die elliptische Verformung des Flexsplines wird dort mit Hilfe einer magnetischen Flüssigkeit hervorgerufen, die sich im Inneren des Flexsplines befindet. Mit Hilfe von ebenfalls innerhalb des Flexsplines angeordneten Elektromagneten wird ein magnetisches Feld erzeugt, das die magnetische Flüssigkeit an zwei am Umfang des Flexsplines diametrisch gegenüberliegenden Stellen anzieht und den Flexspline dadurch ellipsenförmig verformt. Insofern wird auch bei diesem bekannten Spannungswellengetriebe die Verformung des Flexsplines durch die Erzeugung von Anziehungskräften im Bereich der Hauptellipsenachse des Flexsplines hervorgerufen. Aufgrund der hierfür notwendigen magnetisierten Flüssigkeit ist die Realisierung eines solchen Spannungswellengetriebes relativ kompliziert und aufwendig.

Ein Spannungswellengetriebe mit die Verformung des Flexsplines bewirkenden magnetischen Kräften, welche im Bereich der großen Ellipsenachse wirken, ist auch aus der DE 1 135 259 A1 bekannt. Ein weiteres Spannungswellengetriebe geht aus der DE 197 47 566 A1 hervor, bei dem der Flexspline eine elliptische Verformung durch im Bereich der großen Ellipsenachse wirkenden piezogestützten Aktuatoren erfolgt.

### Aufgabenstellung

Der Erfindung liegt die Aufgabe zugrunde, ein Spannungswellengetriebe mit den eingangs genannten Merkmalen vorzuschlagen, mittels dessen Verformungseinrichtung eine unerwünschte Verformung des wenigstens einen Bauteiles korrigierbar ist.

### Erfindung und vorteilhafte Wirkungen

Zur Lösung der Aufgabe wird ein Spannungswellengetriebe (im Weiteren:Getriebe) vorgeschlagen, welches die in Anspruch 1 genannten Merkmale aufweist.

Das erfindungsgemäße Getriebe zeichnet sich unter anderem dadurch aus, dass Mittel zum Erfassen der Form wenigstens eines der Bauteile bzw. dessen Verformung und das Mittel zum Steuern bzw. Regeln der Verformungseinrichtung in Abhängigkeit vom Ist-Zustand der Form bzw. Verformung des zu verformenden Bauteils und einem Soll-Zustand vorgesehen sind.

Durch diese Maßnahme kann einer unerwünschten Verformung und gegebenenfalls Ausbiegung des Bauteiles, insbesondere des Getrieberades, beispielsweise bei einer hohen Last des Getriebes, gezielt durch Einprägen einer entsprechenden Kraft oder Verformung des Bauteiles mittels der Verformungseinrichtung korrigiert werden. Insofern lassen sich dadurch die während des Getriebebetriebes erzeugten unerwünschten Verformungen an dem Bauteil beheben. Damit ist eine insgesamt höhere Stabilität des betreffenden Bauteiles und insofern auch eine höhere Belastbarkeit erreicht. Durch die Erfassung des Ist-Zustands der Form bzw. Verformung des Bauteiles kann eine Überwachung und mittels der Steuerungs- und Regelungsmittel gezielt eine Korrektur der Form bzw. Verformung bei Abweichungen gegenüber dem Soll-Zustand vorgenommen werden. Es ist dadurch eine Optimierung des Getriebelaufverhaltens in individueller Weise möglich. Ziel dieser Korrektur kann neben einer Erhöhung der Drehmomentkapazität des Getriebes zusätzlich oder alternativ auch eine Verminderung der Geräuschentwicklung im Betrieb des Getriebes sein. Auch kann die Korrektur auf die Überlastfähigkeit des Getriebes abzielen.

Sofern die Steuerungs- bzw. Regelungsmittel und Erfassungsmittel mit dem wenigstens einen Bauteil bzw. Flexspline des Spannungswellengetriebes zusammenwirken, kommt diesen Mitteln eine Doppelfunktion zu. Zum einen sollen sie eine kontrollierte Verformung des Flexsplines hervorrufen und somit quasi den Wellengenerator des Spannungswellengetriebes bilden. Zum anderen ermöglichen sie zusätzlich eine gezielte Verformung des Flexsplines, beispielsweise um eine Lagekorrektur oder eine Verschiebung der Mittelachse des Flexsplines vorzunehmen.

Indem die Verformungseinrichtung Zugkraft erzeugende Aktuatoren aufweist, welche vorzugsweise ausschließlich zwischen den Bereichen an dem zu verformenden Bauteil angreifen, greift die Verformungseinrichtung gezielt dort an dem zu verformenden Bauteil an, wo das zu verformende Bauteil dann gerade nicht in Wirkstellung mit dem wenigstens einen anderen Bauteil tritt. Es hat sich überraschenderweise gezeigt, dass durch die Verformung des Bauteils auf eine solche Art und Weise die Laufeigenschaften des gesamten Getriebes verbessert sind, da die sich aufgrund der zwischen den Bereichen wirkende Verformungskräfte die Form des verformten Bauteiles, insbesondere gerade in den besagten Breiten, besonders gut einstellen lässt. Damit kann das verformte Bauteil optimal an das andere Bauteil in den besagten Kontaktbereichen angepasst werden, so dass eine optimale Getriebefunktion gewährleistet ist.

Darüber hinaus sind Zugkraft erzeugende Aktuatoren technisch einfacher realisierbar und insofern kostengünstiger als beispielsweise Druckkraft erzeugende Aktuatoren.

Nach einer Ausgestaltung der Erfindung ist es vorgesehen, dass die Aktuatoren unmittelbar auf das wenigstens eine Bauteil wirken. Hierdurch ist eine Verformungseinrichtung realisierbar, welche ein Verformen des wenigstens einen Bauteils ermöglicht, ohne dass dazu zusätzliche Elemente, wie beispielsweise permanent polarisierte Elemente oder unpolarisierte ferromagnetische Elemente notwendig sind. Hierdurch kann das Getriebe besonders kompakt gebaut werden. Dieser Aspekt kann auch als eigenständiger Erfindungsgedanke gesehen werden.

Nach einer weiteren Ausgestaltung der Erfindung ist es vorgesehen, dass die Aktuatoren auf die den Bereichen abgewandte Seite des wenigstens einen Bauteils wirken. Dadurch ist in axialer Richtung des Getriebes gesehen, ein besonders kompakter Aufbau des Getriebes möglich, denn die Aktuatoren können in axialer Richtung gesehen, im Bereich der Kontaktstellen zwischen dem verformten Bauteil und dem anderen Bauteil angeordnet werden, ohne dass dadurch die Getriebefunktion beeinträchtigt wird.

Von Vorteil ist es, dass zum Verformen des wenigstens einen Bauteils die Aktuatoren ausschließlich Zugkraft erzeugen. Hierdurch kann auf besonders kostengünstige Aktuatoren zurückgegriffen werden, da diese lediglich zum Zugkrafterzeugen und nicht zusätzlich auch zum Druckkrafterzeugen oder lediglich zum Druckkrafterzeugen ausgebildet sein müssen.

Alternativ ist es selbstverständlich auch vorgesehen, dass die Aktuatoren sowohl Zugkräfte als auch Druckkräfte erzeugen können.

Nach einer weiteren Ausgestaltung der Erfindung ist eine zusätzliche Verformungseinrichtung vorgesehen, mittels welcher das wenigstens eine andere Bauteil verformbar und ggf. ausbiegbar ist. Hierdurch ist die Möglichkeit gegeben, dass einer unerwünschten Verformung und ggf. Ausbiegung des anderen Bauteils, gezielt durch Einprägen einer entsprechenden Kraft oder Verformung korrigiert werden kann. Damit ergibt sich insgesamt eine höhere Stabilität des in seiner Form korrigierten Bauteils und es ist insofern auch eine höhere Belastbarkeit erreicht.

Es bietet sich an, dass die zusätzliche Verformungseinrichtung, wie die Verformungseinrichtung, Zugkraft erzeugende Aktuatoren aufweist, welche vorzugsweise unmittelbar an dem wenigstens einem anderen Bauteil angreifen. Insofern ergeben sich hieraus die gleichen Vorteile, wie sie bereits zu der Verformungseinrichtung für das wenigstens eine Bauteil ausgeführt sind.

Nach einer weiteren Ausgestaltung der Erfindung ist es vorgesehen, dass die Aktuatoren zum Erzeugen von magnetischen Kräften ausgebildet sind. Derartige Aktuatoren sind relativ kostengünstig und es können bereits fertige Anordnungen aus dem Bereich der Elektromotorentechnik in einfacher Weise an die Anwendung in dem Spannungswellengetriebe adaptiert werden.

Vorzugsweise sollte dabei das zu verformende Bauteil aus elektrisch leitendem Material und/oder ferromagnetischem oder dauermagnetischem Material bestehen. Hierdurch wird das zu verformende Bauteil selbst Teil der Verformungseinrichtung, sodass zum Verformen des wenigstens einen Bauteiles zusätzliche Mittel mit derartigen Materialeigenschaften nicht erforderlich sind.

Eine weitere Ausgestaltung der Erfindung sieht vor, dass Mittel zum Erfassen der Form wenigstens eines der Bauteile bzw. dessen Verformung und dass Mittel zum Steuern bzw. Regeln der zusätzlichen Verformungseinrichtung in Abhängigkeit vom Ist-Zustand der Form bzw. Verformung des zu verformenden Bauteiles und einem Soll-Zustand vorgesehen ist.

Nach einer weiteren Ausgestaltung der Erfindung ist es vorgesehen, dass die Mittel zum Steuern bzw. Regeln der Verformungseinrichtung bzw. der zusätzlichen Verformungseinrichtung eine Auswerteeinrichtung aufweisen, welche den Soll-Zustand in Abhängigkeit von der jeweiligen Last des Getriebes, insbesondere der mechanischen und/oder thermischen Last, ermittelt. Dadurch ist eine noch bessere Korrektur des verformbaren Bauteiles hinsichtlich seiner Form bzw. Verformung möglich, da die sich mit der Last erheblich ändernden Laufeigenschaften des Bauteiles in dem jeweiligen Soll-Zustand berücksichtigt ist. Der Soll-Zustand ist insofern eine variable Größe. Unter der Last des Getriebes sind auf das Getriebe bzw. das Bauteil wirkende mechanische Belastungen, wie beispielsweise wirkende Kräfte und Drehmomente, wie auch thermische Belastungen zu verstehen. Dabei kann als Parameter zur Erfassung der jeweiligen Getriebelast auch die Drehzahl des Getriebes herangezogen sein.

Nach einer weiteren Ausgestaltung der Erfindung ist es vorgesehen, dass die Aktuatoren verteilt über den Umfang des zu verformenden Bauteils angeordnet sind. Hierdurch kann das Bauteil beziehungsweise das Getrieberad bei ausreichender Anzahl vorliegender Aktuatoren über den gesamten Umfang verformt bzw. ausgebogen werden. Es ist dadurch eine besonders gute Anpassung der Form bzw. Verformung des Bauteiles an eine vorgegebene Soll-Form bzw. Soll-Verformung erreichbar.

Bevorzugt sollten die Aktuatoren äquidistant zueinander angeordnet sein, da sich dadurch ein geringerer regelungstechnischer bzw. steuerungstechnischer Aufwand zum Verformen des Bauteiles ergibt.

Weiterhin bietet es sich an, dass die Anzahl der Aktuatoren einer ganzzahligen Potenz der Basis 2 entspricht, wobei die Anzahl der Aktuatoren mindestens 2 beträgt. Auch durch diese Maßnahme kann der steuerungs- bzw. regelungstechnische Aufwand zum Verformen des Bauteiles gering gehalten werden. Das ist vor allem dann der Fall, wenn zusätzlich auch die Anzahl der Sensorelemente einer ganzzahligen Potenz der Basis 2 entspricht. Selbstverständlich kann auch eine ungerade Anzahl an Aktuatoren vorgesehen sein, die nicht äquivalent angeordnet sind.

Es bietet sich ferner an, dass jeweils zwei der Aktuatoren diametral gegenüberliegend angeordnet sind. Sofern das zu verformende Bauteil ein Getrieberad ist, lässt sich hierdurch auf besonders einfache Weise eine symmetrische Form des Getrieberades bezüglich seiner Drehachse herstellen. Beispielsweise kann dadurch das Getrieberad von einer kreisrunden Form in eine elliptische Form gebracht werden.

Das Verformen des Getrieberades in eine solche elliptische Form ist in besonders einfacher Weise möglich, wenn die jeweils diametral gegenüberliegenden Aktuatoren gemeinsam ansteuerbar sind. Auch kann eine gruppenweise Ansteuerung verschieden zueinander angeordneter Aktuatoren vorgesehen sein.

Alternativ kann es natürlich auch vorgesehen sein, dass die Aktuatoren einzeln ansteuerbar sind. In diesem Fall ist das Verformen des Bauteiles, insbesondere Getrieberades, in besonders flexibler Art und Weise möglich.

Von Vorteil ist es ferner, wenn die Aktuatoren als Elektromagnete ausgebildet sind, da dadurch eine Verformung des Bauteiles, insbesondere Getrieberades, auf technisch einfache Weise realisierbar ist. Auch ist ein solcher Aktuator besonders flexibel steuer- bzw. regelbar.

Nach einer weiteren Ausgestaltung der Erfindung ist es vorgesehen, dass die Erfassungsmittel verteilt über den Umfang des wenigstens einen verformbaren Bauteils angeordnete Sensorelemente aufweisen. Hierdurch kann sehr genau die Form bzw. Verformung des Bauteiles erfasst werden, da bei einer ausreichenden Anzahl von Sensorelementen die Erfassung der Verformung flächendeckend über den Umfang des Bauteiles erreicht ist.

Vorzugsweise sollten die Sensorelemente äquidistant zueinander angeordnet sein. Durch diese Anordnung können einfache numerische Verfahren zur Auswertung der Sensorsignale eingesetzt werden.

In die gleiche Richtung zielt die Maßnahme, dass die Anzahl der Sensorelemente einer ganzzahligen Potenz der Basis 2 entspricht. Die Anzahl der Sensorelemente beträgt dabei mindestens 2. Selbstverständlich können die Sensorelemente auch in einer ungeraden Anzahl und nicht äquidistant verteilt vorliegen.

Nach einer weiteren Ausgestaltung der Erfindung ist es vorgesehen, dass jeweils zwei der Sensorelemente diametral gegenüberliegend angeordnet sind. Sofern das verformbare Bauteil ein Getrieberad ist, kann hierdurch in einfacher Weise festgestellt werden, ob das Getrieberad in einer symmetrischen Form bezüglich seiner Drehachse, beispielsweise als Ellipse, vorliegt. Denn in diesem Fall ist die Form des Getrieberades beziehungsweise die Verformung an den Stellen der beiden jeweils gegenüberliegenden Sensorelemente weitgehend gleich.

Eine weitere Ausgestaltung der Erfindung sieht vor, dass die Sensorelemente als berührungslos messende Sensoren ausgebildet sind. Hierdurch sind keine konstruktiven Änderungen an dem Bauteil erforderlich, wie beispielsweise das Vorsehen von Aufnahmen für die Sensoren. Insofern kann auf kostengünstige Bauteile aus der Massenproduktion zurückgegriffen werden.

Nach einer alternativen Ausgestaltung der Erfindung, kann es natürlich auch vorgesehen sein, dass die Sensorelemente als berührend messende Sensoren ausgebildet sind. Dadurch kann auf besonders kostengünstige Sensoren, wie beispielsweise Dehnungsmessstreifen, zurückgegriffen werden.

Nach einer weiteren Ausgestaltung der Erfindung ist es vorgesehen, dass als Sensorelemente Abstands- und/oder Verformungssensoren vorgesehen sind. Hierdurch kann in einfacher Weise eine Änderung der Form bzw. Verformung des Bauteils erfasst werden. Bei Abstandssensoren wird dazu vorzugsweise die Distanz zwischen dem Abstandssensor und die von dem Abstandssensor anvisierte Oberfläche des Bauteils gemessen, sodass Änderungen in der Form bzw. Verformung des Bauteils gegenüber dem vorzugsweise ortsfest angeordneten Sensorelement einfach und sehr genau erfasst werden können. In noch einfacherer Weise lassen sich die Verformungen des Bauteils mittels der Verformungssensoren messen, durch welche die Formänderungen an der Oberfläche des Bauteils unmittelbar erfasst werden können, beispielsweise wenn sie direkt auf der Oberfläche des Bauteils angebracht werden.

Mit Vorteil werden Dehnungsmessstreifen, laser-, ultraschall- bzw. infrarot-gestützte, kapazitive, induktive und/oder magnetoresistive Messverfahren eingesetzt. Sensoren mit derartigen Messprinzipien sind standardmäßige Sensoren, welche heute in einer großen Vielzahl relativ kostengünstig am Markt angeboten werden.

Nach einer vorteilhaften Ausgestaltung der Erfindung ist es vorgesehen, dass jedem der Aktuatoren eines der Sensorelemente zugeordnet ist, dessen Signal zur Ansteuerung de Aktuators genutzt wird. Dadurch ist eine optimale Überwachung der von jedem einzelnen Aktuator vorgenommenen Verformungen an dem Getrieberad möglich. Auf diese Weise lassen sich auch kleinste Verformungen an dem Getrieberad kontrolliert durchführen.

In die gleiche Richtung geht die Maßnahme, dass jeweils Sensorelement und zugehöriger Aktuator in unmittelbarer Nähe zueinander angeordnet sind.

Dabei bietet es sich besonders an, wenn die Sensorelemente jeweils integraler Bestandteil der zugehörigen Aktuatoren sind. Sensorelement und zugehöriger Aktuator können dadurch bereits werkseitig als Sensor-Aktuator-Einheit hergestellt werden, so dass ein Ausrichten von Aktuator zu Sensorelement bei der Montage der Verformungseinrichtung nicht mehr erforderlich ist. Sensorelement und zugehöriger Aktuator lassen sich also werkseitig als optimal aufeinander abgestimmte Einheiten herstellen.

Nach einer weiteren Ausgestaltung der Erfindung ist es vorgesehen, dass bei einem als Getrieberad ausgebildeten verformbaren Bauteil wenigstens zwei der Aktuatoren in Richtung der Mittelachse des Getrieberades gesehen, nebeneinander liegend angeordnet sind. Dadurch kann die Form des Getrieberades, in axialer Richtung gesehen, gezielt verändert werden, so dass eine im Betrieb des Getriebes entstehende unerwünschte Verformung des Getrieberades in axialer Richtung korrigierbar ist. Durch über den Umfang des Getrieberades und zusätzlich in axialer Richtung angeordnete Aktuatoren ist somit eine radiale wie auch axiale Verformung des Getrieberades möglich.

Nach einer weiteren Ausgestaltung der Erfindung ist es vorgesehen, dass zur Verformung bzw. Ausbiegung von zwei Bauteilen des Getriebes die Erfassungsmittel miteinander gekoppelt sind und vorzugsweise gemeinsame Steuerung- bzw. Regelungsmittel vorgesehen sind. Dadurch lässt sich das Getriebelaufverfahren in besonders effizienter Weise verbessern, da die Verformung beider Bauteile aufeinander abgestimmt werden kann.

Nach einer Ausgestaltung der Erfindung ist es vorgesehen, dass das wenigstens eine verformbare Bauteil als Getriebering ausgebildet ist und dass die Verformungseinrichtung und die Erfassungsmittel innerhalb des Getrieberinges angeordnet sind. Hierdurch ist ein besonders kompaktes Spannungswellengetriebe erzielbar.

Von Vorteil ist es dabei, dass die Verformungseinrichtung und die Erfassungsmittel an einer Hohlwelle des Getriebes angeordnet sind. Mittels der Hohlwelle kann bei einer innerhalb des Getrieberings angeordneten Verformungseinrichtung und Erfassungsmitteln problemlos die gesamte Verkabelung zu den Sensorelementen und den Aktuatoren durch den Hohlraum der Welle nach außen abgeführt werden.

Alternativ zu der Anordnung der Erfassungsmittel und der Verformungseinrichtung innerhalb des Getrieberinges kann es auch vorgesehen sein, dass die Erfassungsmittel und die Verformungseinrichtung außerhalb des Getrieberinges angeordnet sind. Hierdurch kann die mit dem wenigstens einen Bauteil bzw. Flexspline verbundene Welle als Hohlwelle mit besonders großem Durchmesser ausgebildet werden. Dies ist bei innen liegendem Wellengenerator nicht realisierbar, da sich dort zwischen der Welle und dem Flexspline die Aktuatoren der Verformungseinrichtung befinden und somit von Hause aus den Durchmesser der Welle bzw. Hohlwelle begrenzen.

Die Erfindung findet bevorzugte Anwendung in Fahrzeugen, Druckmaschinen, Werkzeugmaschinen und optischen Geräten. Weitere Anwendungsgebiete sind die Luft- und Raumfahrttechnik, die Antriebstechnik, die Messtechnik sowie die Halbleiterindustrie.

### Ausführungsbeispiele

Weitere Vorteile und Anwendungsmöglichkeiten der vorliegenden Erfindung ergeben sich aus der nachfolgenden Beschreibung zweier Ausführungsbeispiele anhand der Zeichnung.

Es zeigen:
- Figur 1: ein mögliches Ausführungsbeispiel eines Spannungswellengetriebes mit innenliegendem Wellengenerator und ellipsenförmig verformtem Flexspline als Querschnittsdarstellung,
- Figur 2: das Spannungswellengetriebe gemäß Figur 1 im Längsschnitt,
- Figur 3: ein weiteres Ausführungsbeispiel eines Spannungswellengetriebes mit innenliegendem Wellengenerator und ellipsenförmig verformtem Flexspline als Querschnittsdarstellung,
- Figur 4: das Spannungswellengetriebe gemäß Figur 3 im Längsschnitt,
- Figur 5: ein Ausführungsbeispiel eines Spannungswellengetriebes mit innen liegendem Wellengenerator und verformtem Flexspline als Querschnittsdarstellung,
- Figur 6: das Spannungswellengetriebe gemäß Figur 5 im Längsschnitt,
- Figur 7: ein Ausführungsbeispiel eines Spannungswellengetriebes mit außen liegendem Wellengenerator und ellipsenförmig verformtem Flexspline als Querschnittsdarstellung und
- Figur 8: das Spannungswellengetriebe gemäß Figur 7 im Längsschnitt.

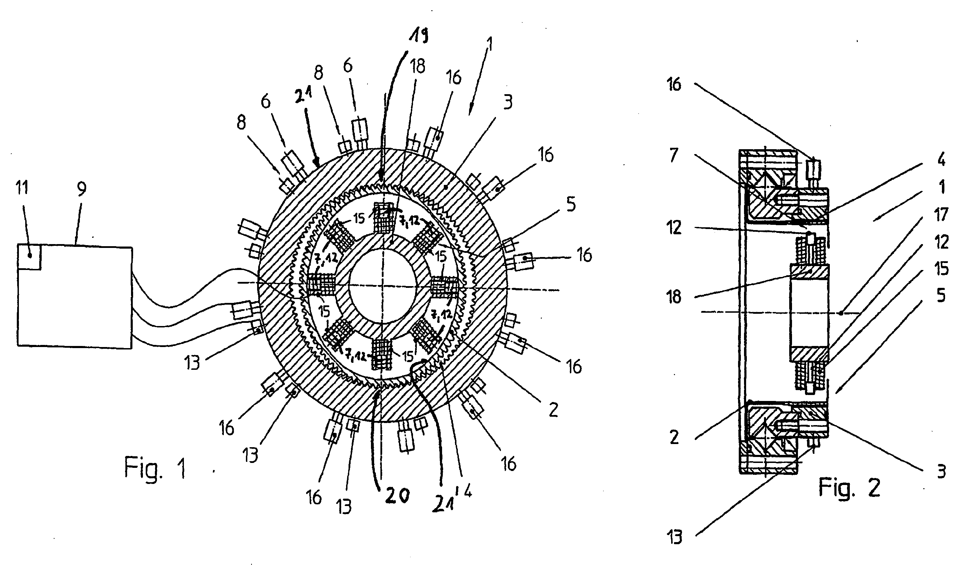

Figuren 1 und 2 zeigen - in schematischer Darstellung - ein Spannungswellengetriebe 1 mit wenigstens zwei formschlüssig, vorzugsweise über eine Umfangsverzahnung 4, miteinander gekoppelten Bauteilen beziehungsweise Getrieberädern 2 und 3 zum Übertragen einer Drehbewegung. Bei dem einen Getrieberad 2 handelt es sich vorliegend um den Flexspline des Spannungswellengetriebes 1 und bei dem anderen Getrieberad 3 um den Circular Spline des Spannungswellengetriebes 1. Alternativ kann das andere Getrieberad 3 auch als der (hier nicht dargestellte) Dynamic Spline des Spannungswellengetriebes 1 ausgebildet sein.

Unter dem Flexspline wird vorliegend der elastisch verformbare Getriebering des Spannungswellengetriebes 1 verstanden, welcher sich über die Verzahnung 4 im Eingriff mit der Innenverzahnung des Circular Splines 3 befindet. Der Flexspline 2 ist dabei in eine vorzugsweise elliptische Form verformbar, wobei die elliptische Verformung als eine über den Umfang des Flexsplines 2 umlaufende Verformung erzeugt werden kann. Der Flexspline 2 befindet sich mit seiner Außenverzahnung lediglich im Bereich 19, 20 der großen Ellipsenachse in Eingriff mit der Innenverzahnung des Circular Splines 3 und durch Verlagern der elliptischen Verformung über den Umfang des Flexsplines 2 kommt es zu einer Relativbewegung zwischen Flexspline 2 und Circular Spline 3.

Bei dem als Circular Spline ausgebildeten anderen Getriebering 3 handelt es sich um einen zylindrisch ausgebildeten Getriebering bzw. Hohlrad.

Das Spannungswellengetriebe 1 weist ferner zwei, vorzugsweise drehfest zum Gehäuse des Spannungswellengetriebes angeordnete Verformungseinrichtungen 5, 6 auf, wobei mittels der einen Verformungseinrichtung 5 der Flexspline 2 und mittels der anderen Verformungseinrichtung 6 der Circular Spline 3 radial verformbar und gegebenenfalls ausbiegbar sind.

Die Verformungseinrichtungen 5, 6 weisen jeweils Zugkraft erzeugende Aktuatoren 15 bzw. 16 auf. Bevorzugt handelt es sich hierbei um solche Aktuatoren, welche ausschließlich Zugkräfte erzeugen. Jene Aktuatoren 15 bzw. 16 wirken vorzugsweise unmittelbar auf das zu verformende Bauteil, nämlich den Flexspline und den Circular Spline 3. Die Aktuatoren wirken auf diejenige Seite 21 des zu verformenden Bauteils 2 bzw. 3, welche den im Wirkkontakt befindlichen Verzahnungen der beiden Bauteile 2, 3 abgewandt ist.

Auf diese Weise ist ein besonders kompakt bauendes Spannungswellengetriebe realisierbar, da die Aktuatoren 15 bzw. 16 in radialer Richtung im Bereich der Verzahnungen angeordnet werden können.

Die Aktuatoren 15 der Verformungseinrichtung 5 zum Verformen des Flexsplines 2 greifen, vorzugsweise ausschließlich, zwischen den Bereichen 19, 20 an dem Flexspline 2 an. Bei dem Spannungswellengetriebe 1 sind Mittel 7, 8 zum Erfassen der Form beziehungsweise Verformung des Flexsplines 2 bzw. Circular Splines 3 sowie Mittel 9, 10 zum Steuern bzw. Regeln der jeweiligen Verformungseinrichtung 5, 6 in Abhängigkeit vom Ist-Zustand der Form bzw. Verformung des Flexsplines 2 bzw. Circular Splines 3 und einem Soll-Zustand vorgesehen. Dadurch lassen sich gezielt Korrekturen an der Form bzw. Verformung des jeweiligen Getrieberinges 2, 3, auch bei Stillstand des Getriebes 1 wie auch im Getriebebetrieb vornehmen, sodass auf diese Weise eine Erhöhung der Drehmomentkapazität sowie der Überlastfähigkeit beider Getrieberinge 2, 3 erreichbar ist.

Die Mittel 9 zum Steuern bzw. Regeln der Verformungseinrichtungen 5, 6 weisen darüber hinaus eine Auswerteeinrichtung 11 auf, welche den Soll-Zustand in Abhängigkeit von der jeweiligen Last des Spannungswellengetriebes 1 berechnet.

Auch ist es bei dem Ausführungsbeispiel gemäß der Figuren 1 und 2 vorgesehen, dass die Verformungseinrichtung 5 zur Verformung des Flexsplines 2 sowie die Steuerungs- bzw. Regelungsmittel 9 zum Erzeugen der umlaufenden elliptischen Verformung des Flexsplines 2 ausgebildet sind, welche den Wellengenerator des Spannungswellengetriebes 1 bilden.

Weiterhin ist es bei dem Ausführungsbeispiel gemäß der Figuren 1 und 2 vorgesehen, dass die Verformung des Flexsplines 2 und des Circular Splines 3 von den gleichen Steuerungs- bzw. Regelungsmitteln 9 gesteuert bzw. geregelt wird, wobei vorzugsweise dadurch eine Abstimmung der Verformungen beider Getrieberinge 2, 3 erreicht werden kann.

Die Erfassungsmittel 7, 8 weisen jeweils verteilt über den Umfang des entsprechenden Getrieberades 2, 3 angeordnete Sensorelemente 12, 13 auf. Die Anzahl der Sensorelemente 12, 13 ist dabei geradzahlig gewählt, wobei vorzugsweise jeweils zwei der Sensorelemente 12 bzw. 13 diametral gegenüberliegend angeordnet sind. Die Sensorelemente sind als berührungslos messende und/oder berührend messende Sensoren ausgebildet. Dabei können als Sensorelemente Abstandssensoren 12 und/oder Verformungssensoren 13 vorgesehen sein, wobei bevorzugt Dehnungsmessstreifen, laser-, ultraschall- bzw. infrarot-gestützte, kapazitive oder induktive Messverfahren zum Einsatz kommen.

Die jeweilige Verformungseinrichtung 5 bzw. 6 weist ferner über den Umfang des entsprechenden Getrieberades 2 bzw. 3 verteilt angeordnete Aktuatoren 15 bzw. 16 auf. Die Anzahl der Aktuatoren 15 bzw. 16 ist geradzahlig gewählt, wobei vorzugsweise jeweils zwei der Aktuatoren 15 bzw. 16 diametral gegenüberliegend angeordnet sind und jeweils die diametral gegenüberliegenden Aktuatoren 15 bzw. 16 gemeinsam ansteuerbar sind.

Alternativ kann es auch vorgesehen sein, dass die Aktuatoren 15 bzw. 16 einzeln ansteuerbar sind, wobei die Betätigung der Aktuatoren elektromagnetisch erfolgt, vorzugsweise die Aktuatoren als Elektromagnet ausgebildet sind.

Jedem der Aktuatoren 15 bzw. 16 ist eines der Sensorelemente 12, 13 zugeordnet, dessen Signal zur Ansteuerung des Aktuators 15 bzw. 16 genutzt wird. Sensorelement 13 und zugehöriger Aktuator 16 des Circular Splines 3 sind in unmittelbarer Nähe zueinander angeordnet, wobei die dort über den Umfang liegenden Sensorelemente 13 und Aktuatoren 16 jeweils zueinander vorzugsweise in äquidistantem Abstand liegen. Die zum Erfassen der Verformung des Flexsplines 2 dienenden Sensorelemente 12 sind - anders als die Sensorelemente 13 am Circular Spline 3 - bevorzugt integraler Bestandteil der jeweils zugehörigen Aktuatoren 15, wie aus Figur 2 ersichtlich ist.

Die Aktuatoren 15 der Verformungseinrichtung 5 für den Flexspline 2 sind dabei innerhalb des Flexsplines 2 an einer Hohlwelle 18 des Spannungswellengetriebes 1 angeordnet. Demgegenüber sind die Aktuatoren 16 der Verformungseinrichtung 6 sowie die Sensorelemente 13 der Erfassungsmittel 8 für den Circular Spline 3 außen am Circular Spline 3 angeordnet.

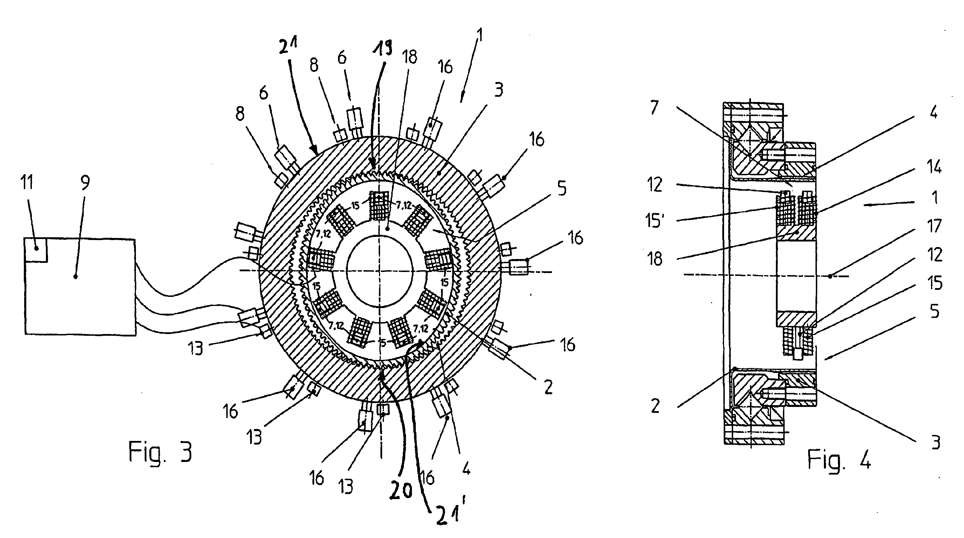

Figuren 3 und 4 zeigen - in schematischer Darstellung - eine weitere Ausführungsform des Spannungswellengetriebes 1. Bauteile, welche mit denen des Ausführungsbeispiels gemäß der Figuren 1 und 2 gleich sind, sind mit gleichen Bezugszeichen versehen; insofern wird auf die Beschreibung zu Figur 1 und Figur 2 verwiesen. Die Ausführungsform des Spannungswellengetriebes 1 gemäß der Figuren 3 und 4 unterscheidet sich von der Ausführungsform gemäß der Figuren 1 und 2 unter anderem darin, dass dort die Aktuatoren 16 der Verformungseinrichtung 6 sowie die Sensorelemente 13 der Erfassungsmittel 8 für den Circular Spline 3 jeweils in einer ungeraden Anzahl vorliegen.

Bei dem in den Figuren 3 und 4 dargestellten Ausführungsbeispiel des Spannungswellengetriebes 1 ist es ferner vorgesehen, dass an wenigstens einem Umfangsabschnitt wenigstens zwei der Aktuatoren 14, 15', vorzugsweise mit jeweils integriertem Sensorelement 12, in Richtung der Mittelachse 17 des Flexsplines 2 nebeneinander liegend angeordnet sind. Dadurch kann einer radialen Verformung des Flexpsplines in axialer Richtung, das heißt in Richtung der Mittelachse 17 gesehen, entgegengewirkt werden.

Selbstverständlich kann es auch vorgesehen sein, dass über den Umfang verteilt an sämtlichen Verformungsstellen in Richtung der Mittelachse 17 des Flexsplines 2 gesehen nebeneinander liegend wenigstens zwei Aktuatoren vorgesehen sind.

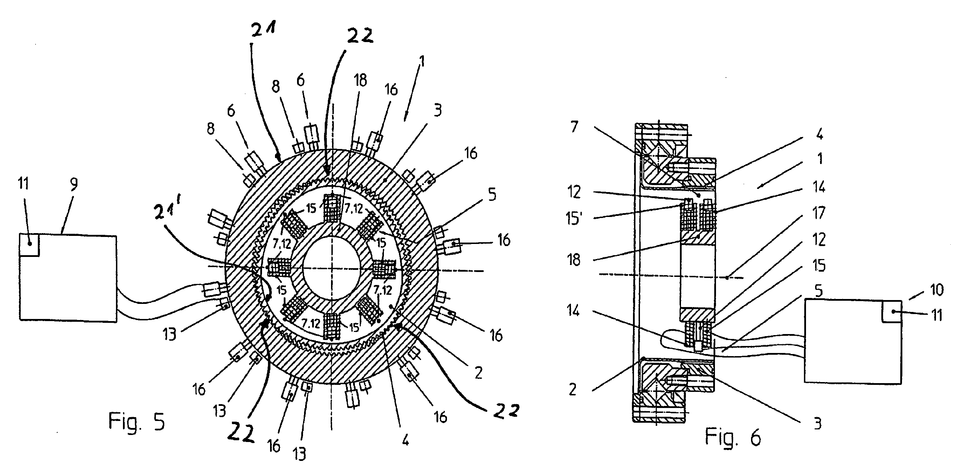

Figuren 5 und 6 zeigen wiederum ein anderes Ausführungsbeispiel des Spannungswellengetriebes 1 in schematischer Darstellung. Bauteile, welche mit denen der Ausführungsbeispiele gemäß den Figuren 1 bis 4 identisch sind, sind mit gleichen Bezugszeichen versehen, insofern wird auf die Beschreibung zu den vorstehenden Figuren verwiesen.

Die Ausführungsform des Spannungswellengetriebes 1 gemäß der Figuren 5 und 6 unterscheidet sich von der Ausführungsform gemäß der Figuren 3 und 4 u. a. dadurch, dass die Verformungseinrichtung 5 den Flexspline 2 in der Weise verformt bzw. ausbiegt, dass der Flexspline 2 sich mit drei Umfangsbereichen 22 in Eingriff mit dem Circular Spline 3 befindet. Selbstverständlich ist es auch möglich, die Verformung des Flexsplines so vorzunehmen, dass mehr als 3 Zahneingriffsbereiche vorliegen. Ferner sind zur Verformung des Circular Splines 3 sowie des Flexsplines 2 jeweils separate Steuerungs-/Regelungsmittel 9 bzw. 10 vorgesehen.

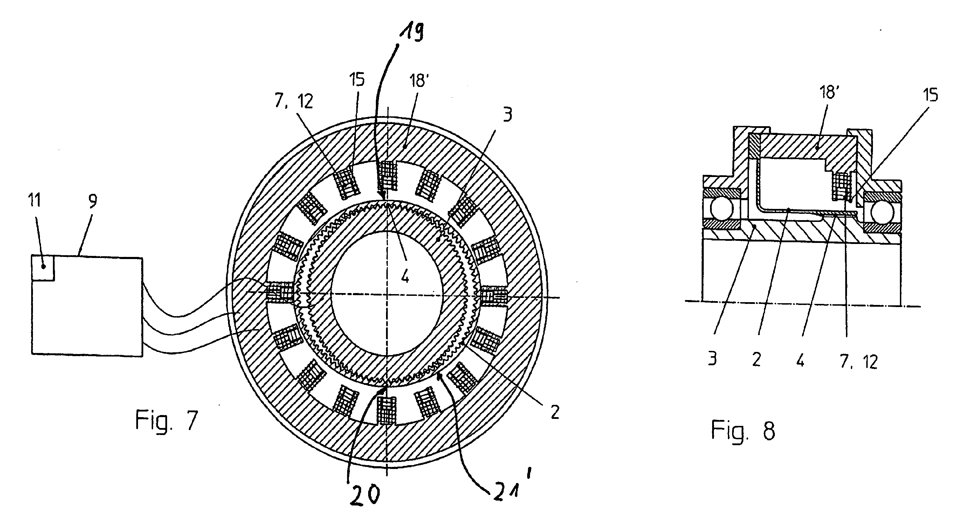

In den Figuren 7 und 8 ist wiederum ein anderes Ausführungsbeispiel des Spannungswellengetriebes 1 dargestellt. Jene Ausführungsform unterscheidet sich von der Ausführungsform gemäß der Figuren 5 und 6 unter anderem darin, dass die Verformungseinrichtung 5 zur Verformung des Flexsplines 2 außerhalb des Flexsplines 2 angeordnet ist und insofern von außen auf den Flexspline 2 wirkt. Die Aktuatoren 15 der Verformungseinrichtung 5 sind dazu am Innenumfang einer das Spannungswellengetriebe 1 umfassenden Hohlwelle 18' angeordnet. Innerhalb des Flexsplines 2 ist bei diesem Ausführungsbeispiel der Circular Spline 3 angeordnet, welcher über seine Außenverzahnung in Eingriff mit der Innenverzahnung des Flexsplines 2 steht.

### Bezugszeichenliste

- 1: Spannungswellengetriebe
- 2: Getrieberad, Getriebering, Flexspline
- 3: Getrieberad, Circular Spline/Dynamic Spline
- 4: Umfangsverzahnung
- 5: Verformungseinrichtung
- 6: Verformungseinrichtung
- 7: Erfassungsmittel
- 8: Erfassungsmittel
- 9: Steuerungs-/Regelungsmittel
- 10: Steuerungs-/Regelungsmittel
- 11: Auswerteeinrichtung
- 12: Sensorelement
- 13: Sensorelement
- 14: Aktuatoren, Elektromagnet
- 15, 15': Aktuatoren, Elektromagnet
- 16: Aktuatoren, Elektromagnet
- 17: Mittelachse
- 18, 18': Hohlwelle
- 19: Bereich
- 20: Bereich
- 21, 21': Seite
- 22: Bereiche

## Patentansprüche

1. Spannungswellengetriebe (1) mit wenigstens zwei formschlüssig, vorzugsweise über eine Umfangsverzahnung (4) oder kraftschlüssig, vorzugsweise über Reibflächen, miteinander gekoppelten Bauteilen (2, 3) zum Übertragen einer Drehbewegung und/oder Wandeln einer Drehbewegung in eine translatorische Bewegung mit gegebenenfalls einer Drehbewegung und mit einer Verformungseinrichtung (5), mittels welcher wenigstens eines der Bauteile (2, 3) derart elastisch verformbar ist, dass die Bauteile (2, 3) lediglich in wenigstens zwei Bereichen (19, 20; 22) miteinander in Wirkstellung treten, durch welche die Bauteile (2, 3) relativ zueinander bewegbar sind, wobei die Verformungseinrichtung (5) Zugkraft erzeugende Aktuatoren (14, 15) aufweist, welche zwischen den Bereichen (19, 20; 22) an dem wenigstens einen Bauteil (2) angreifen, **dadurch gekennzeichnet, dass** Mittel (7; 8) zum Erfassen der Form wenigstens eines der Bauteile (2, 3) bzw. dessen Verformung und dass Mittel (9; 10) zum Steuern bzw. Regeln der Verformungseinrichtung (5) in Abhängigkeit vom Ist-Zustand der Form bzw. Verformung des Bauteiles (2) und einem Soll-Zustand vorgesehen sind.

2. Getriebe (1) nach Anspruch 1, **dadurch gekennzeichnet, dass** die Aktuatoren (14, 15) auf die den Bereichen (19, 20; 22) abgewandte Seite (21) des wenigstens einen Bauteiles (2) wirken.

3. Getriebe (1) nach Anspruch 1 oder 2, **dadurch gekennzeichnet, dass** eine zusätzliche Verformungseinrichtung (6) vorgesehen ist, mittels welcher das wenigstens eine andere Bauteil (3) verformbar und gegebenenfalls ausbiegbar ist.

4. Getriebe (1) nach Anspruch 3, **dadurch gekennzeichnet, dass** die zusätzliche Verformungseinrichtung (6) Zugkraft erzeugende Aktuatoren (16) aufweist, welche vorzugsweise unmittelbar an dem wenigstens einen anderen Bauteil (3) angreifen.

5. Getriebe (1) nach einem der vorhergehenden Ansprüche, **dadurch gekennzeichnet, dass** die Aktuatoren (14, 15, 16) zum Erzeugen von magnetischen Kräften ausgebildet sind und vorzugsweise das zu verformende Bauteil (2, 3) aus elektrisch leitendem Material und/oder ferromagnetischem oder dauermagnetischem Material besteht.

6. Getriebe (1) nach einem der vorhergehenden Ansprüche, **dadurch gekennzeichnet, dass** die Mittel (9; 10) zum Steuern bzw. Regeln der Verformungseinrichtung (5; 6) eine Auswerteeinrichtung (11) aufweisen, welche den Soll-Zustand in Abhängigkeit von der jeweiligen Last des Getriebes (1), insbesondere der mechanischen und/oder thermischen Last, ermittelt.

7. Getriebe (1) nach einem der vorhergehenden Ansprüche, **dadurch gekennzeichnet, dass** die Aktuatoren (14, 15, 16) verteilt über den Umfang des zu verformenden Bauteils (2, 3), vorzugsweise äquidistant zueinander angeordnet sind.

8. Getriebe (1) nach einem der vorhergehenden Ansprüche, **dadurch gekennzeichnet, dass** die Erfassungsmittel (7; 8) verteilt über den Umfang des wenigstens einen verformbaren Bauteils (2; 3), vorzugsweise äquidistant zueinander angeordnete Sensorelemente (12; 13) aufweisen.

9. Getriebe (1) nach Anspruch 8, **dadurch gekennzeichnet, dass** jedem der Aktuatoren (14, 15; 16) eines der Sensorelemente (12; 13) zugeordnet ist, dessen Signal zur Ansteuerung des Aktuators (14, 15; 16) genutzt wird.

10. Getriebe (1) nach einem der vorgehenden Ansprüche, **dadurch gekennzeichnet, dass** bei einem als Getrieberad (2; 3) ausgebildeten verformbaren Bauteil wenigstens zwei der Aktuatoren (14, 15) in Richtung der Mittelachse (17) des Getrieberades (2) gesehen, nebeneinander liegend angeordnet sind.

11. Getriebe (1) nach einem der vorhergehenden Ansprüche, **dadurch gekennzeichnet, dass** zur Verformung bzw. Ausbiegung von zwei Bauteilen (2, 3) des Getriebes (1) die Erfassungsmittel (7, 8) der beiden Bauteile (2, 3) miteinander gekoppelt sind und vorzugsweise gemeinsame Steuerungs- bzw. Regelungsmittel (9) vorgesehen sind.

12. Fahrzeug, Druck- oder Werkzeugmaschine mit wenigstens einem Getriebe (1) nach einem der vorhergehenden Ansprüche.

## Claims

1. Harmonic transmission (1) with at least two components (2, 3), which are coupled together preferably by way of a circumferential toothing (4) or by force coupling, preferably by way of frictional surfaces, for transmission of a rotary movement and/or conversion of a rotary movement into a translational movement with optionally a rotary movement and with a deforming device (5) by means of which at least one of the components (2, 3) is so resiliently deformable that the components (2, 3) enter into a mutually operative setting, by which the components (2, 3) are movable relative to one another, merely in at least two regions (19, 20; 22), wherein the deforming device (5) comprises actuators (14, 15) which produce a tension force and which engage the at least one component (2, 3) between the regions (19, 20; 22), **characterised in that** means (7; 8) for detection of the shape of at least one of the components (2, 3) or the deformation thereof and means (9; 10) for controlling or regulating the deforming device (5) in dependence on the actual state of the shape or deformation of the component (2) and a target state are provided.

2. Transmission (1) according to claim 1, **characterised in that** the actuators (14, 15) act on the side (21), which is remote from the regions (19, 20; 22), of the at least one component (2).

3. Transmission (1) according to claim 1 or 2, **characterised in that** an additional deforming device (6) is provided, by means of which the at least one other component (3) is deformable and optionally bendable outwardly.

4. Transmission (1) according claim 3, **characterised in that** the additional deforming device (6) comprises actuators (16) which produce a tension force and which preferably directly engage the at least one other component (3).

5. Transmission (1) according to one of the preceding claims, **characterised in that** the actuators (14, 15, 16) are constructed for producing magnetic forces and preferably the component (2, 3) to be deformed consists of electrically conductive material and/or ferrormagnetic or permanently magnetic material.

6. Transmission (1) according to any one of the preceding claims, **characterised in that** the means (9; 10) for controlling or regulating the deforming device (5; 6) comprise an evaluating device (11) which determines the target state in dependence on the respective load of the transmission (1), particularly the mechanical and/or thermal load.

7. Transmission (1) according to any one of the preceding claims, **characterised in that** the actuators (14, 15, 16) are distributed over the circumference of the component (2, 3) to be deformed, preferably arranged equidistantly from one another.

8. Transmission (1) according to any one of the preceding claims, **characterised in that** the detecting means (7; 8) are distributed over the circumference of the at least one deformable component (2; 3), preferably have sensor elements (12; 13) arranged equidistantly from one another.

9. Transmission (1) according to claim 8, **characterised in that** a respective one of the sensor elements (12; 13) is associated with each of the actuators (14, 15; 16) and the signal of the sensor element is used for drive control of the actuator (14, 15; 16).

10. Transmission (1) according to any one of the preceding claims, **characterised in that** in the case of a deformable component constructed a gearwheel (2; 3) at least two of the actuators (14, 15) are arranged adjacent to one another as seen in the direction of the centre axis (17) of the gearwheel (2).

11. Transmission (1) according to any one of the preceding claims, **characterised in that** for deformation or outward bending of two components (2, 3) of the transmission (1) the detecting means (7, 8) of the two components (2, 3) are coupled together, and preferably common control or regulating means (9) are provided.

12. Vehicle, printing machine or machine tool with at least one transmission (1) according to any one of the preceding claims.

## Revendications

1. Transmission harmonique (1) comprenant au moins deux composants (2, 3) couplés l'un à l'autre par engagement par correspondance géométrique, de préférence par le biais d'une denture périphérique (4), ou par engagement par force, de préférence par des surfaces de frottement, pour le transfert d'un mouvement de rotation et/ou la conversion d'un mouvement de rotation en un mouvement de translation avec éventuellement un mouvement de rotation et comprenant un dispositif de déformation (5) au moyen duquel au moins l'un des composants (2, 3) peut être déformé élastiquement de telle sorte que les composants (2, 3) n'interagissent l'un avec l'autre que dans au moins deux régions (19, 20 ; 22), et par laquelle interaction les composants (2, 3) peuvent être déplacés relativement l'un par rapport à l'autre, le dispositif de déformation (5) présentant des actionneurs (14, 15) produisant une force de traction, qui viennent en prise entre les régions (19, 20 ; 22) avec l'au moins un composant (2), **caractérisée en ce que** des moyens (7 ; 8) pour détecter la forme d'au moins l'un des composants (2, 3) ou sa déformation sont prévus, et **en ce que** des moyens (9 ; 10) pour commander ou réguler le dispositif de déformation (5) en fonction de l'état réel de la forme ou de la déformation du composant (2) et d'un état de consigne sont prévus.

2. Transmission (1) selon la revendication 1,
**caractérisée en ce que** les actionneurs (14, 15) agissent sur le côté (21) de l'au moins un composant (2) opposé aux régions (19, 20 ; 22).

3. Transmission (1) selon la revendication 1 ou 2, **caractérisée en ce qu'**un dispositif de déformation supplémentaire (6) est prévu, au moyen duquel l'au moins un autre composant (3) peut être déformé et éventuellement fléchi.

4. Transmission (1) selon la revendication 3,
**caractérisée en ce que** le dispositif de déformation supplémentaire (6) présente des actionneurs (16) générant une force de traction, qui viennent en prise de préférence directement avec l'au moins un autre composant (3).

5. Transmission (1) selon l'une quelconque des revendications précédentes, **caractérisée en ce que** les actionneurs (14, 15, 16) sont réalisés pour produire des forces magnétiques et de préférence le composant à déformer (2, 3) se compose de matériau électriquement conducteur et/ou de matériau ferromagnétique ou à magnétisme permanent.

6. Transmission (1) selon l'une quelconque des revendications précédentes**, caractérisée en ce que** les moyens (9 ; 10) pour commander ou réguler le dispositif de déformation (5 ; 6) présentent un dispositif d'analyse (11) qui détecte l'état de consigne en fonction de la charge respective de la transmission (1), notamment de la charge mécanique et/ou thermique.

7. Transmission (1) selon l'une quelconque des revendications précédentes, **caractérisée en ce que** les actionneurs (14, 15, 16) sont répartis sur la périphérie du composant à déformer (2, 3), de préférence de manière équidistante les uns des autres.

8. Transmission (1) selon l'une quelconque des revendications précédentes, **caractérisée en ce que** les moyens de détection (7 ; 8) présentent des éléments de capteur (12 ; 13) répartis sur la périphérie de l'au moins un composant déformable (2, 3), de préférence de manière équidistante les uns des autres.

9. Transmission (1) selon la revendication 8, **caractérisée en ce que** l'on associe à chacun des actionneurs (14, 15 ; 16) l'un des éléments de capteur (12 ; 13), dont le signal est utilisé pour commander l'actionneur (14, 15 ; 16).

10. Transmission (1) selon l'une quelconque des revendications précédentes, **caractérisée en ce que** dans le cas d'un composant déformable réalisé sous forme de roue de transmission (2 ; 3), au moins deux des actionneurs (14, 15), vus dans la direction de l'axe médian (17) de la roue de transmission (2), sont disposés l'un à côté de l'autre.

11. Transmission (1) selon l'une quelconque des revendications précédentes, **caractérisée en ce que** pour la déformation ou la flexion de deux composants (2, 3) de la transmission (1), les moyens de détection (7, 8) des deux composants (2, 3) sont couplés l'un à l'autre et des moyens de commande ou de régulation communs (9) sont de préférence prévus.

12. Véhicule, machine d'impression ou machine-outil comprenant au moins une transmission (1) selon l'une quelconque des revendications précédentes.
